(19) Europäisches Patentamt
European Patent Office
Office européen des brevets

(11) **EP 0 645 353 B1**

(12) **EUROPÄISCHE PATENTSCHRIFT**

(45) Veröffentlichungstag und Bekanntmachung des Hinweises auf die Patenterteilung:
**08.08.2001 Patentblatt 2001/32**

(51) Int Cl.[7]: **C04B 35/491**

(21) Anmeldenummer: **94114170.7**

(22) Anmeldetag: **09.09.1994**

(54) **Formkörper auf der Basis von PZT (Pb(Zr,Ti)O3, Bleizirkonat-Bleititanat), Verfahren und Zwischenprodukt zu deren Herstellung**

Shaped articles on basis of PZT(Pb(Zr,Ti)03, lead zirconate-lead titanate), process and intermediate product for their production

Corps moulés à base de PZT(Pb(Zr,Ti)03, zirconate de plomb-titanate de plomb), procédé et produit intermédiaire pour leur production

(84) Benannte Vertragsstaaten:
**DE DK ES FR GB IT NL**

(30) Priorität: **27.09.1993 DE 4332831**

(43) Veröffentlichungstag der Anmeldung:
**29.03.1995 Patentblatt 1995/13**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
• **Glaubitt, Walther, Dipl.-Ing.
D-97209 Veitshöchheim (DE)**
• **Jahn, Rainer, Dipl.-Ing.
D-97209 Veitshöchheim (DE)**
• **Merklein, Stephan, Dipl.-Chem.
D-97074 Würzburg (DE)**

(74) Vertreter:
**Leonhard, Frank Reimund, Dipl.-Ing. et al
Leonhard - Olgemöller - Fricke
Patentanwälte
Postfach 10 09 57
80083 München (DE)**

(56) Entgegenhaltungen:
**EP-A- 0 470 898** **WO-A-90/12755**
**US-A- 5 072 035**

EP 0 645 353 B1

**Beschreibung**

Die Erfindung betrifft Formkörper auf der Basis von PZT ($Pb(Zr_x,Ti_y)O_3$, Bleizirkonat-Bleititanat, mit x+y = 1), sowie ein Verfahren und ein Zwischenprodukt zu deren Herstellung. Insbesondere betrifft die Erfindung die Herstellung von PZT-Endlosfasern.

Bleizirkonat ($PbZrO_3$) und Bleititanat ($PbTiO_3$) bilden eine lückenlose Reihe von Mischkristallen mit Perovskit-ähnlicher Struktur. Polykristallines Bleizirkonattitanat ($Pb(Zr,Ti)O_3$, PZT) ist ein wichtiger ferroelektrischer Werkstoff, für den aufgrund seiner attraktiven dielektrischen, piezoelektrischen und elektrooptischen Eigenschaften zahlreiche elektronische Anwendungen existieren.

Im Bereich der morphotropen Phasengrenze zwischen der zirkonatreichen rhomboedrischen Modifikation und der titanatreichen tetragonalen Modifikation erreichen zahlreiche anwendungsrelevante ferroelektrische Eigenschaften ihr Maximum.

Abgesehen von der Variation des Zr/Ti-Verhältnisses lassen sich die Materialeigenschaften durch Veränderung der Kristallitgröße, sowie durch Dotierung und durch teilweise oder vollständige Substitution einzelner Komponenten variieren.

Bei der Dotierung werden geringe Mengen an Fremdionen mit abweichenden Ladungen (üblicherweise < 10 %) zugegeben, die die Kristallstruktur modifizieren. Als Dotierungen werden eine Vielzahl von Metallionen eingesetzt, z.B. $La^{3+}$, $Nd^{3+}$, $Sb^{3+}$, $Bi^{3+}$, $Th^{3+}$, $Nb^{5+}$, $Sb^{5+}$, $W^{6+}$, $Na^+$, $Fe^{3+}$, $Fe^{2+}$, $Co^{3+}$, $Co^{2+}$, etc. Die Dotierung mit Lanthan verbessert die optischen Eigenschaften stark (Transparenz, Doppelbrechung), so daß solche PLZT-Materialien vor allem für elektrooptische Anwendungen von Bedeutung sind.

Durch Substitution von Pb, Zr oder Ti mit Ionen, die sich geringfügig im Radius unterscheiden, wird ebenfalls die Struktur und damit die Eigenschaften verändert. $Pb^{2+}$ wird häufig durch Erdalkaliionen ($Mg^{2+}$, $Ca^{2+}$, $Sr^{2+}$, $Ba^{2+}$) substituiert, für die Substitution von $Ti^{4+}$ und $Zr^{4+}$ eignen sich z.B. $Sn^{4+}$ und $Hf^{4+}$.

Für innovative Anwendungen ferroelektrischer Werkstoffe in Kompositen sind PZT-Langfasern, die sensorische oder auch aktuatorische Funktionen übernehmen können, ein interessantes Material. Die Herstellung von PZT-Fasern ist erst seit wenigen Jahren Gegenstand der Forschung, wobei drei unterschiedliche Methoden beschrieben werden:

- die Precursor-Methode (über einen Sol-Gel-Prozess)
  Aus $Pb(OAC)_2 \cdot 3H_2O$, $Zr(OPr^n)_4$, $Ti(OPr^i)_4$ und mit Methanol als Lösungsmittel wird nach Zugabe von Wasser ein Precursorsol erhalten, aus dem nach dem Entfernen flüchtiger Bestandteile eine viskose Flüssigkeit gewonnen wird, aus der im Handversuch Fasern von 1 m Länge gezogen werden konnten. Zur Verbesserung der Fadenzieheigenschaften wird Polyvinylpyrrolidon und zur Herstellung von dicken, porösen Fasern PZT-Pulver in die Spinnmasse eingearbeitet (Mat.Res.Soc.Symp. Proc., 271, S. 517-523 (1992)). Nachteil dieses Verfahrens ist jedoch, daß Fäden in nur ungenügender Länge erhalten werden können. Ein weiterer Nachteil besteht darin, daß unter Einsatz von Lösungsmitteln gearbeitet wird, daß der Faserherstellung ein Trocknungsverfahren anzuschließen ist, und daß bei der Faserherstellung Lösungsmittel frei wird, das zu entsorgen ist.

- die Extrusionsmethode
  Dabei wird kommerzielles PZT-Pulver (z.B. PZT 501A, Ultrasonic Powders Inc.) in eine 20 %-ige Polyvinylalkohol-Lösung eingearbeitet, die Suspension wird extrudiert und das Extrudat gesintert. Wird bei niedrigen Temperaturen gesintert, so erhält man keine dichten Fasern, und bei hohen Temperaturen resultiert ein heterogenes Gemisch, da pulverförmiges PZT eingesetzt wird. Ein weiterer Nachteil dieser Methode besteht darin, daß die Faserdicke durch die Schüttdichte beeinflußt wird und daß dicke Fasern resultieren. Zur Herstellung dünner Fasern ist feinkörniges Pulver erforderlich, daß nur in aufwendigen Verfahren gewonnen werden kann. Desweiteren müssen die Fasern gesintert werden, was hohe Temperaturen erforderlich macht. Durch den Sinterprozeß sind Fehlbildungen möglich und es resultieren Fehlstellen im Gefüge, die zu einer Minderung der Eigenschaften führen.

- die Replikationsmethode
  Kohlenfasermatten werden mit einem PZT-Precursorsol getränkt. Nach Entfernen der Kohlenfasern durch Ausbrennen bei 600 °C resultiert ein PZT-Hohlfasergerüst, das bei 1285 °C gesintert wird. Hier handelt es sich nicht um einen Spinnvorgang, sondern um ein Tauchverfahren, d.h. um einen Beschichtungsvorgang, der bei einzelnen Fasern nur schwer durchführbar ist. Ferner sind bei dieser Methode hohe Temperaturen anzuwenden, die dieses Verfahren sehr kostenintensiv machen. Desweiteren ist durch den Beschichtungsvorgang die Herstellung dichter Fasern unmöglich. Außerdem ist dieses Verfahren schlecht zu handhaben und läßt nur geringe Variationsmöglichkeiten bzgl. der Dicke der resultierenden Fasern zu.

Aus der US-PS 5,072,035 ist ein Verfahren zur Herstellung von PZT-Fasern bekannt. Dabei wird eine Mischung aus $Zr(OPr^n)_4$ und $Ti(OPr^i)_4$ in getrockneter Stickstoffatmosphäre zwei Stunden unter Rückfluß gekocht, mit einer oder mehreren blei-organischen Verbindungen versetzt, und für mindestens 4 weitere Stunden unter Rückfluß gekocht. Die flüssige Mischung wird bei 80 °C eingeengt, bis eine gelb-braune, viskose, harzartige Masse resultiert, aus der Fäden gezogen werden können. Dieses Verfahrens ist wegen der Notwendigkeit des langen Rückflußkochens und des Arbeitens unter Wasserausschluß (unter einer getrockneten Stickstoffatmosphäre) umständlich, aufwendig und kostspielig.

Aufgabe der vorliegenden Erfindung ist es deshalb, PZT-Endlosfasern bereit zu stellen, die dicht, porenfrei und mechanisch stabil sind, sowie Faserstärken von 10 µm aufweisen. Ferner ist es Aufgabe der vorliegenden Erfindung, ein Verfahren bereit zu stellen, mit dem PZT-Endlosfasern einfach, kostengünstig und ohne den Einsatz von Spinnhilfsmittel hergestellt werden können. Ferner soll das Verfahren universell anwendbar sein, so daß auch eine Dotierung sowie eine Substitution der Metalle Pb, Ti und Zr möglich ist. Außerdem soll das Verfahren nicht nur Faserstärken von 10 µm hervorbringen, sondern es soll bzgl. der Dicke der resultierenden Fasern breite Variationsmöglichkeiten bieten.

Insbesondere ist es Aufgabe der Erfindung, eine geeignete Spinnmasse einfach, kostengünstig und ohne den Einsatz von Spinnhilfsmittel bereit zu stellen, aus der Endlosfäden mit breiter Variationsbreite bzgl. der Faserdicke gezogen werden können. Ferner soll die Spinnmasse lagerstabil sein und über lange Topfzeiten verfügen.

Außerdem soll die Spinnmasse zur Herstellung von Beschichtungen und von Formkörpern geeignet sein. D.h. im weitesten Sinne ist es Aufgabe der Erfindung, Formkörper aus PZT, sowie ein Verfahren und ein Zwischenprodukt zu deren Herstellung bereit zu stellen.

Gelöst wird diese Aufgabe durch Formkörper auf der Basis von PZT, die dadurch erhältlich sind, daß man organische Zirkoniumverbindungen der allgemeinen Formel I,

$$Zr(OR^1)_4 \qquad (I)$$

und organische Titanverbindungen der allgemeinen Formel II,

$$Ti(OR^2)_4 \qquad (II),$$

in denen die Reste $R^1$ und $R^2$ jeweils gleich oder verschieden sind und geradkettige, verzweigte oder cyclische Alkyl-Reste mit 1 bis 10 Kohlenstoff-Atomen bedeuten, getrennt oder zusammen und bezogen auf 1 Mol der Verbindungen I plus II mit 0 bis 4 Mol eines Alkohols oder einer Mischung von Alkoholen der allgemeinen Formel III und/oder IV versetzt,

$$R^3\text{-X-}R^4\text{-OH} \qquad (III)$$

$$R^3\text{-CX-}R^4\text{-OH} \qquad (IV)$$

in denen $R^3$ einen geradkettigen, verzweigten oder cyclischen Alkyl-Rest mit 1 bis 10 Kohlenstoff-Atomen bedeutet, $R^4$ einen Alkylen-Rest mit 2 bis 4 Kohlenstoff-Atomen darstellt und X gleich O, S oder $NR^5$ ist, mit $R^5$ gleich Wasserstoff oder Alkyl mit 1 bis 4 Kohlenstoff-Atomen,

daß man die resultierenden Mischung(en) bzw. die Verbindungen I und II getrennt oder zusammen und bezogen auf jeweils 1 Mol der Verbindungen I und II mit 1 bis 3 Molen einer oder mehrerer Carbonsäuren mit 2 bis 10 Kohlenstoff-Atomen umsetzt, daß man alles, bezogen auf 1 Mol der Verbindungen I plus II, mit 1 bis 1.5 Mol eines oder mehrerer Pb(II)- und/oder Pb(IV)-Carboxylate umsetzt, die sich von substituierten oder unsubstituierten, einwertigen oder mehrwertigen, gesättigten oder ungesättigten, geradkettigen, verzweigten, cyclischen oder aromatischen Carbonsäuren oder Hydroxycarbonsäuren mit 1 bis 18 Kohlenstoffatomen ableiten, daß man die Mischung einer hydrolytischen Kondensation unterzieht, daß man die flüchtigen Anteile entfernt, bis eine bei Raumtemperatur feste Masse resultiert, daß man die feste Masse erhitzt, bis eine hochviskose Flüssigkeit entsteht, daß man diese Flüssigkeit zu Formkörpern verarbeitet, und daß man die Formkörper auf Temperaturen von mindestens 500 °C erhitzt.

Überraschenderweise wurde festgestellt, daß die erfindungsgemäße Spinnmasse nicht nur zu Langfasern oder Endlosfasern gezogen werden kann, die erfindungsgemäße Masse kann auch zur Herstellung von Beschichtungen sowie von Formkörpern jedweder Art eingesetzt werden. Wenn im folgenden von Spinnmassen die Rede ist, so ist darunter ganz allgemein eine Masse, d.h. ein Zwischenprodukt zur Herstellung von Formkörpern zu verstehen.

Die Herstellung der erfindungsgemäßen Spinnmassen erfolgt in der Art und Weise, daß man organische Zirkonium-Verbindungen der Formel I und organische Titan-Verbindungen der Formel II zusammen oder getrennt mit der oder den Carbonsäuren komplexiert, daß man getrennt vorliegende, komplexierte Zirkonium- und Titan-Verbindungen vereinigt, daß man die Mischung aus komplexierten Zirkonium- und Titan-Verbindungen mit einem oder mehreren Bleicarboxylaten umsetzt und alles einer hydrolytischen Kondensation unterzieht.

Wird als Carbonsäure Essigsäure eingesetzt, so sind die Titan- und Zirkonium-Verbindungen getrennt von einander zu komplexieren. Wird nämlich eine Mischung aus 0.53 mol $Zr(OPr^n)_4$ und 0.47 mol $Ti(OPr^i)_4$ mit 3.0 mol Essigsäure komplexiert, so entsteht bei Zugabe von z.B. $Pb(OAc)_2 \cdot 3H_2O$ ein schwammiger Niederschlag, der weder durch weiteren Essigsäurezusatz noch durch Erhitzen in Lösung gebracht werden kann. Aus dieser Masse können, auch nach Entfernen der flüchtigen Bestandteile, keine Fäden gezogen werden.

Überraschenderweise werden bei getrennter Umsetzung von $Zr(OPr^n)_4$ und $Ti(OPr^i)_4$ mit Essigsäure Verbindungen erhalten, die sich ohne zu präzipitieren im PZT-Stoffmengenverhältnis mit Bleicarboxylaten, z. B. mit $Pb(OAc)_2 \cdot 3H_2O$, mischen lassen. Nach Entfernen der flüchtigen Bestandteile im Ölpumpenvakuum resultiert eine Viskose, aus der mit einem Glasstab Fäden von ca. 1 m Länge gezogen werden können.

Desweiteren wurde überraschenderweise festgestellt, daß im Gegensatz zu Essigsäure Propionsäure zu einer Mischung aus $Zr(OPr^n)_4$ und $Ti(OPr^i)_4$ gegeben werden kann, ohne daß bei Zugabe von z.B. $Pb(OAc)_2 \cdot 3H_2O$ Präzipitationen auftreten. Es entsteht vielmehr eine klare, niedrigviskose Flüssigkeit, aus der nach Abziehen flüchtiger Bestandteile bei Temperaturen von 90 °C und einem Druck von 20 hPa eine klare, hochviskose Flüssigkeit mit einem PZT-Gehalt von 55 % erhalten wird, aus der Fäden gezogen werden können. Durch weiteres Einengen bei Temperaturen von 140 °C und einem Druck von 1 hPa entsteht bei Raumtemperatur ein spröder, pulverisierbarer Feststoff (PZT-Gehalt 65%), der überraschenderweise durch Erhitzen auf 150 °C in eine klare, hochviskose Flüssigkeit konvertiert, aus der mit einem Glasstab ebenfalls Fäden gezogen werden können.

Um den Nachweis der Tauglichkeit für einen technischen Herstellungsprozeß zu führen, wurden Spinnversuche an einer Technikumsanlage durchgeführt. Der spröde Feststoff wurde bei 150 °C "geschmolzen", bei einem Druck von 150 kPa durch eine 100 μm Düse gepreßt, und die dabei geformte Faser auf einen rotierenden Zylinder gewickelt. Es wurden Wickelgeschwindigkeiten von 120 m/min erreicht und bis zu 600 m lange Fasern erhalten.

Die Gelfasern wurden innerhalb einer Stunde auf 660 °C erhitzt. Überraschenderweise schmolz während des Temperns die Faser nicht mehr, so daß nach Beendigung des Tempervorgangs gelbe Fasern mit einem Durchmesser von 10 μm erhalten werden. Röntgendiffratometrische Messungen zeigen die für PZT typischen Reflexlagen.

Geeignete Zr- oder Ti-Alkoholate der Formel I bzw. II sind solche, bei denen die Reste $R^1$ und $R^2$ geradkettige, verzweigte oder cyclische Alkyl-Gruppen mit 1 bis 10 Kohlenstoff-Atomen darstellen, wobei jeweils solche mit 2 bis 5 oder 6 Kohlenstoff-Atomen bevorzugt sind und besonders gute Resultate liefern. Ohne Einschränkung der Allgemeinheit sind Beispiele für geeignete Zr- und Ti-Alkoholate $Zr(OPr^n)_4$, $Ti(OPr^i)_4$, $Zr(OBu)_4$ oder $Ti(OEt)_4$.

Bei bevorzugten Ausführungsformen der erfindungsgemäßen Spinnmassen werden Zr- und Ti-Alkoholate im molaren Verhältnis von 53:47 eingesetzt.

Geeignete Bleicarboxylate zur Herstellung der erfindungsgemäßen Spinnmassen sind z.B. Bleiadipat, Bleibenzoat, Bleicitrat, Bleicyclohexanbutyrat, Bleiformiat, Bleifumarat, Blei-12-hydroxystearat, Bleilactat, Bleilinolat, Bleimaleat, Bleinaphthenat, Bleioctanoat, Bleioleat, Bleioxalat, Bleipalmitat, Bleiphthalat, Bleisalicylat, Bleistearat, Bleisuccinat, Bleitartrat oder Blei-2-hydroxy-2-methylpropionat. Zur Herstellung der erfindungsgemäßen Spinnmassen sind Bleiacetate der allgemeinen Formel V bevorzugt,

$$Pb(O\text{-}CO\text{-}CH_3)_l \cdot mPbO \cdot nH_2O \qquad (V),$$

in der l = 2 oder 4 ist, und m = 0 bis 2 und n = 0 bis 10 bedeutet. Dabei kann es sich um Blei(II)acetate, um Blei(IV)acetate oder auch um basische Bleiacetate handeln, wobei $Pb(O\text{-}CO\text{-}CH_3)_2 \cdot 3H_2O$ ganz besonders bevorzugt ist und besonders gute Resultate liefert. Eine weitere bevorzugte Bleiverbindung ist z.B. $Pb(O\text{-}CO\text{-}CH_3)_4$.

In den Bleicarboxylaten gegebenenfalls vorhandenes Kristallwasser bietet den Vorteil, daß es zur hydrolytischen Kondensation herangezogen werden kann. Die Bleicarboxylate können entweder in stöchiometrischen Mengen zugesetzt werden oder auch im Überschuß, wobei der molare Bleianteil zwischen 1 und 1.5 Mol liegt. Ein Bleiüberschuß bietet den Vorteil, daß der beim Tempervorgang durch PbO-Abdampfen auftretende Bleiverlust von Anfang an ausgeglichen wird.

Es ist nicht erforderlich, das Blei(II)-carboxylat als solches der Reaktionsmischung zuzugeben, sondern es ist auch möglich, das Blei(II)-carboxylat ganz oder teilweise in situ entstehen zu lassen. Dazu wird der Reaktionsmischung Blei(II)-oxid und pro Mol mindestens ein weiteres Mol einer oder mehrerer Carbonsäuren zugegeben. Wird z.B. Propionsäure zu PbO gegeben, so löst sich dieses vollständig unter Bildung von Bleipropionat und Wasser. Es wird also auch bei dieser Verfahrensvariante der Weg über ein Bleicarboxylat und Hydrolyse beschritten.

Die niedermolekularen Carbonsäuren zur Komplexierung der Ti und Zr- Verbindungen werden in Mengen zwischen 1 und 3 Mol, bezogen auf ein Mol $Zr(OR^1)_4$ und $Ti(OR^2)_4$ zugegeben, wobei eine Menge von 3 Mol bezogen auf Ti + Zr bevorzugt ist und besonders gute Resultate ergibt.

Als niedermolekulare Carbonsäuren zur Komplexierung der Verbindungen $Zr(OR^1)_4$ und $Ti(OR^2)_4$ sind Carbonsäuren mit 2 bis 10 Kohlenstoff-Atomen geeignet, wobei Propion-, Valerian-, Capron- oder Caprylsäure, oder ein Gemisch derselben bevorzugt sind. Diese Carbonsäuren können entweder zur getrennten Carboxylierung der Ti- und Zr-Verbindungen herangezogen werden, oder aber auch zur Carboxylierung einer Mischung derselben. Ganz besonders gute Ergebnisse werden mit Propionsäure oder einer Mischung aus Capron- und Propionsäure erhalten. Des weiteren können die Carbonsäuren auch in Form ihrer Anhydride zugegeben werden. Die Carbonsäuren dienen nicht nur als carboxylierendes Agens, sondern sie fungieren auch als polare Lösungsmittel.

Überraschenderweise wurde festgestellt, daß beim Zusammenmischen der einzelnen Komponenten eine nur geringe Wärmeentwicklung auftritt, so daß auf den Einsatz von Kühlwasser verzichtet werden kann.

In weiteren Ausführungsformen der erfindungsgemäßen Spinnmassen werden die Zr- und/oder Ti-Alkoholate vor der Carboxylierung entweder getrennt oder als Mischung einer Alkoholyse unterzogen. Auf diese Weise können Gruppen eingeführt werden, die die Spinneigenschaften der erfindungsgemäßen Spinnmassen weiter verbessern. Geeignete Alkohole hierfür sind solche der Formeln $R^3$-X-$R^4$-OH (III) und $R^3$-CX-$R^4$-OH (IV), in denen die Reste X, $R^3$ und $R^4$ die bereits genannte Bedeutung haben. Bezogen auf ein Mol der Verbindungen I plus II können zwischen 0 und 4 Mol der Verbindungen III und/oder IV eingesetzt werden, d.h. es können alle 4 Liganden der Verbindungen I und/oder II ausgetauscht werden.

Bevorzugte Ausführungsformen der Alkohole der Formel III und IV sind i-$C_3H_7$-O-$C_2H_4$-OH, n-$C_4H_9$-O-$C_2H_4$-OH, $C_2H_5$-NH-$C_2H_4$-OH, $C_2H_5$-S-$C_2H_4$-OH, $CH_3$-CO-$CH_2$-OH, $CH_3$-CO-CH($CH_3$)-OH oder $C_2H_5$-CO-$CH_2$-OH, wobei besonders gute Ergebnisse n-$C_4H_9$-O-$C_2H_4$-OH und i-$C_3H_7$-O-$C_2H_4$-OH liefern.

Nach der Carboxylierung wird die Mischung aus carboxylierten Ti- und Zr-Verbindungen und aus Bleicarboxylat einer hydrolytischen Kondensation unterworfen. Diese wird mit Hilfe des gegebenenfalls vorhandenen Kristallwassers des Bleicarboxylates und/oder durch Einwirken von Wasser oder Feuchtigkeit durchgeführt, gegebenenfalls unter Zugabe eines Katalysators und/oder eines Lösungsmittels. Zur kontrollierten Hydrolyse kann z.B. eine Apparatur verwendet werden, die feuchte Luft mit eingestelltem Wasserdampfpartialdruck in die Mischung leitet.

Nach beendeter hydrolytischer Kondensation werden auf übliche Art und Weise die flüchtigen Bestandteile der Mischung entfernt, und es resultiert eine bei Raumtemperatur feste, spröde Masse, die das Schmelzverhalten (Schmelzintervall) eines organischen Polymers zeigt. In Form dieser festen, spröden Substanz ist die erfindungsgemäße Spinnmasse lagerstabil und mühelos zu handhaben.

Zur Herstellung von Fasern, Beschichtungen oder anderen Formkörpern wird die feste, spröde Masse erhitzt, bis eine hochviskose Flüssigkeit resultiert, mit der nach üblichen Verfahren Fasern gezogen, Beschichtungen aufgetragen oder Formkörper gefertigt werden können. Zur Reduzierung der Viskosität, z.B. für Beschichtungen, ist es ferner möglich, die hochviskose Flüssigkeit mit Lösungsmitteln zu verdünnen. Hier empfiehlt es sich, als Lösungsmittel solche Alkohole einzusetzen, die das System im Zuge der Alkoholyse oder der hydrolytischen Kondensation selbst produziert. Andernfalls kann nicht völlig ausgeschlossen werden, daß es zu einer unerwünschten Alkoholyse kommt, obwohl Versuche zeigten, daß eine Alkoholyse mit Isopropoxyethanol oder Pentandiol keine negativen Auswirkungen auf die Spinnbarkeit hatten, möglicherweise aber einen positiven Einfluß auf das Sinterverhalten verüben. Generell kann jedoch gesagt werden, daß es prinzipiell möglich ist, die Carboxylierung, das Zusammenmischen der einzelnen Komponenten und die hydrolytische Kondensation auch in Anwesenheit von Lösungsmitteln durchzuführen. Diese werden dann zusammen mit den vom System produzierten flüchtigen Bestandteilen entfernt.

Nach der Formgebung werden die Fasern, Beschichtungen oder Formkörper auf Temperaturen von mindestens 500 °C erhitzt. Bei etwa 400 °C ist die "Organik" vollständig entfernt und es bildet sich ein amorphes Mischoxid, und bei etwa 500 °C beginnt die Kristallisation des PZT. Bevorzugt ist es, wenn die Temperaturerhöhung mit hohen Aufheizraten erfolgt, z.B. mit 600 °C oder mehr pro Stunde, da dadurch die Bildung von unerwünschten Phasen weitgehend unterbleibt.

Überraschenderweise wurde festgestellt, daß die aus der hochviskosen Flüssigkeit gebildeten Fasern, Beschichtungen oder Formkörper sich während der Temperaturerhöhung nicht wieder verflüssigen. Dies berechtigt zu der Annahme, daß es sich bei der hochviskosen Flüssigkeit nicht um eine Schmelze der festen, spröden Masse im herkömmlichen Sinne handeln kann. Die Gelfaser besitzt einen um ca. 3% höheren Feststoffgehalt als die Spinnmasse. Dies ist auf ein Abdampfen von flüchtigen Bestandteilen beim Spinnvorgang zurückzuführen. Möglicherweise bewirkt dieser geringfügige Substanzverlust, daß die Gelfaser bei einer Temperaturerhöhung nicht wieder schmilzt.

Wie eingangs schon erwähnt, lassen sich durch Dotierung die piezoelektrischen Eigenschaften von PZT stark verändern. Die Dotierung der erfindungsgemäßen Fasern, Beschichtungen oder Formkörpern aus PZT erfolgt durch einfaches Zumischen entsprechender Metallalkoholate oder -carboxylate zur Reaktionsmischung oder ganz allgemein durch Zugabe löslicher Metallverbindungen, deren Anionen thermisch ausgetrieben werden können. Geeignete Metalle hierfür sind seltene Erden, ferner Alkalimetalle, sowie La, Sb, Bi, Nb, W, Ta, Fe, Co, Mn, Ni, Ga, In, Cr, Sc, Ir oder Ag.

Desweiteren können zur teilweisen Substitution des Bleis Mg-, Ca-, Sr- oder Ba-Verbindungen und zur Substitution des Zirkon und/oder des Titan Sn- oder Hf-Verbindungen zugemischt werden.

Die erfindungsgemäßen Fasern, Beschichtungen oder Formkörper können als funktionskeramische Werkstoffe Anwendung finden, wobei in erster Linie deren piezoelektrische Eigenschaften gefragt sind und nicht so sehr, im Falle der Fasern, die mechanisch verstärkenden. Bei Nutzung der piezoelektrischen Eigenschaften sind sensorische (Änderung des elektrischen Feldes bei mechanischer Belastung) und aktuatorische Anwendungen möglich. Als sensorische Anwendung kommt z.B. die Detektion von Materialschäden (in Kunststoffen nach Steinschlägen) in Frage. Dazu werden PZT-Fasern, auch in Form von Netzstrukturen, in diese (z.B. Flugzeugflügel) eingearbeitet. Für die Detektion von Materialschäden ist der Einsatz von PZT-Pulver ungeeignet, da wegen der örtlichen Bestimmung des Schadens isolierte Stränge bzw. Netzstrukturen erforderlich sind.

**Patentansprüche**

1. Verfahren zur Herstellung von Formkörpern auf der Basis von PZT (Pb(Zr,Ti)$O_3$, Bleizirkonat-Bleititanat), **dadurch gekennzeichnet,** daß man organische Zirkoniumverbindungen der allgemeinen Formel I,

$$Zr(OR^1)_4 \qquad (I)$$

und organische Titanverbindungen der allgemeinen Formel II,

$$Ti(OR^2)_4 \qquad (II),$$

in denen die Reste $R^1$ und $R^2$ jeweils gleich oder verschieden sind und geradkettige, verzweigte oder cyclische Alkyl-Reste mit 1 bis 10 Kohlenstoff-Atomen bedeuten, getrennt oder zusammen und bezogen auf 1 Mol der Verbindungen I plus II mit 0 bis 4 Mol eines Alkohols oder einer Mischung von Alkoholen der allgemeinen Formeln III und/oder IV versetzt,

$$R^3\text{-X-}R^4\text{-OH} \qquad (III)$$

$$R^3\text{-CX-}R^4\text{-OH} \qquad (IV)$$

in denen $R^3$ einen geradkettigen, verzweigten oder cyclischen Alkyl-Rest mit 1 bis 10 Kohlenstoff-Atomen bedeutet, $R^4$ einen Alkylen-Rest mit 2 bis 4 Kohlenstoff-Atomen darstellt und X gleich O, S oder $NR^5$ ist, mit $R^5$ gleich Wasserstoff oder Alkyl mit 1 bis 4 Kohlenstoff-Atomen, daß man die resultierende(n) Mischung(en) bzw. die Verbindungen I und II getrennt oder zusammen und bezogen auf jeweils 1 Mol der Verbindungen I und II mit 1 bis 3 Molen einer oder mehrerer Carbonsäuren mit 2 bis 10 Kohlenstoff-Atomen umsetzt, daß man alles, bezogen auf 1 Mol der Verbindungen I plus II, mit 1 bis 1.5 Mol eines oder mehrerer Pb(II)- und/oder Pb(IV)-Carboxylate umsetzt, die sich von substituierten oder unsubstituierten, einwertigen oder mehrwertigen, gesättigten oder ungesättigten, geradkettigen, verzweigten, cyclischen oder aromatischen Carbonsäuren oder Hydroxycarbonsäuren mit 1 bis 18 Kohlenstoffatomen ableiten, daß man die Mischung einer hydrolytischen Kondensation unterzieht, daß man die flüchtigen Anteile entfernt, daß man die resultierende, bei Raumtemperatur feste Masse erhitzt, bis eine hochviskose Flüssigkeit entsteht, daß man diese Flüssigkeit zu Formkörpern verarbeitet, und daß man die Formkörper auf Temperaturen von mindestens 500 °C erhitzt.

2. Verfahren nach Anspruch 1, **dadurch gekennzeichnet,** daß man die hochviskose Flüssigkeit zu Fasern, Folien oder Beschichtungen verarbeitet.

3. Verfahren nach Anspruch 1 oder 2, **dadurch gekennzeichnet**, daß man Verbindungen der Formel I und/oder II einsetzt, in der $R^1$ und/oder $R^2$ Alkyl-Reste mit 2 bis 5 Kohlenstoff-Atomen bedeutet.

4. Verfahren nach einem oder mehreren der Ansprüche 1 bis 3, **dadurch gekennzeichnet,** daß man zur in-situ-Herstellung des Blei(II)-carboxylates Blei(II)-oxid und, bezogen auf ein Mol Blei(II)-oxid, mindestens ein weiters Mol einer oder mehrerer Carbonsäuren einsetzt.

5. Verfahren nach einem oder mehreren der Ansprüche 1 bis 4, **dadurch gekennzeichnet,** daß man zur in-situ-Herstellung der Carbonsäuren eines oder mehrere Carbonsäureanhydride einsetzt.

6. Verfahren nach einem oder mehreren der Ansprüche 1 bis 5, **dadurch gekennzeichnet,** daß man die Umsetzung bevorzugt mit Carbonsäuren mit 2 bis 6 Kohlenstoff-Atomen durchführt.

7. Verfahren nach einem oder mehreren der Ansprüche 1 bis 6, **dadurch gekennzeichnet,** daß man die Umsetzung mit einem Bleiacetat der allgemeinen Formel V durchführt,

$$Pb(O\text{-CO-}CH_3)_l \cdot mPbO \cdot nH_2O \qquad (V),$$

in der l = 2 oder 4, m = 0 bis 2 und n = 0 bis 10 bedeutet.

8. Verfahren nach einem oder mehreren der Ansprüche 1 bis 7, **dadurch gekennzeichnet,** daß man Pb(O-CO-$CH_3$)$_2 \cdot 3H_2O$ einsetzt

9. Verfahren nach einem oder mehreren der Ansprüche 1 bis 8, **dadurch gekennzeichnet,** daß man die hydrolytische Kondensation durch Zugabe von Wasser oder Feuchtigkeit durchführt.

**10.** Verfahren nach einem oder mehreren der Ansprüche 1 bis 9, **dadurch gekennzeichnet,** daß man die Verbindungen I und II in einem molaren Verhältnis von 53:47 einsetzt.

**11.** Verfahren nach einem oder mehreren der Ansprüche 1 bis 10, **dadurch gekennzeichnet,** daß man zur Dotierung der Formkörper die Mischung(en) und/oder die hochviskose Flüssigkeit mit Fremdmetallverbindungen versetzt.

**12.** Verfahren nach einem oder mehreren der Ansprüche 1 bis 11, **dadurch gekennzeichnet,** daß man zur teilweisen Substitution des $Pb^{2+}$ die Mischung(en) und/oder die hochviskose Flüssigkeit mit Mg(II)- und/oder Ca(II)- und/oder Sr(II)- und/ oder Ba(II)-Verbindungen versetzt.

**13.** Verfahren nach einem oder mehreren der Ansprüche 1 bis 12, **dadurch gekennzeichnet,** daß man zur teilweisen Substitution des $Zr^{4+}$ und/oder des $Ti^{4+}$ die Mischung(en) und/oder die hochviskose Flüssigkeit mit Sn(IV)- und/oder mit Hf(IV)-Verbindungen versetzt.

**14.** Verfahren nach einem oder mehreren der Ansprüche 1 bis 13, **dadurch gekennzeichnet,** daß man die hochviskose Flüssigkeit vor der Formgebung mit Lösungsmittel verdünnt.

**15.** Bei Raumtemperatur feste Zusammensetzung zur Herstellung von Formkörpern auf der Basis von PZT (Pb(Zr,Ti)O$_3$, Bleizirkonat-Bleititanat), **dadurch erhältlich,** daß man organische Zirkoniumverbindungen der allgemeinen Formel I,

$$Zr(OR^1)_4 \qquad (I)$$

und organische Titanverbindungen der allgemeinen Formel II,

$$Ti(OR^2)_4 \qquad (II),$$

in denen die Reste $R^1$ und $R^2$ jeweils gleich oder verschieden sind und geradkettige, verzweigte oder cyclische Alkyl-Reste mit 1 bis 10 Kohlenstoff-Atomen bedeuten, getrennt oder zusammen und bezogen auf 1 Mol der Verbindungen I plus II mit 0 bis 4 Mol eines Alkohols oder einer Mischung von Alkoholen der allgemeinen Formel III und/oder IV versetzt,

$$R^3\text{-}X\text{-}R^4\text{-}OH \qquad (III)$$

$$R^3\text{-}CX\text{-}R^4\text{-}OH \qquad (IV)$$

in der $R^3$ einen geradkettigen, verzweigten oder cyclischen Alkyl-Rest mit 1 bis 10 Kohlenstoff-Atomen bedeutet, $R^4$ einen Alkylen-Rest mit 2 bis 4 Kohlenstoff-Atomen darstellt und X gleich O, S oder $NR^5$ ist, mit $R^5$ gleich Wasserstoff oder Alkyl mit 1 bis 4 Kohlenstoff-Atomen, daß man die resultierende(n) Mischung(en) bzw. die Verbindungen I und II getrennt oder zusammen und bezogen auf jeweils 1 Mol der Verbindungen I und II mit 1 bis 3 Molen einer oder mehrerer Carbonsäuren mit 2 bis 10 Kohlenstoff-Atomen umsetzt, daß man alles, bezogen auf 1 Mol der Verbindungen I plus II, mit 1 bis 1.5 Mol eines oder mehrerer Pb(II)- und/ oder Pb(IV)-Carboxylate umsetzt, die sich von substituierten oder unsubstituierten, einwertigen oder mehrwertigen, gesättigten oder ungesättigten, geradkettigen, verzweigten, cyclischen oder aromatischen Carbonsäuren oder Hydroxycarbonsäuren mit 1 bis 18 Kohlenstoffatomen ableiten, daß man die Mischung einer hydrolytischen Kondensation unterzieht, und daß man die flüchtigen Anteile entfernt.

**16.** Zusammensetzung nach Anspruch 15, **dadurch gekennzeichnet,** daß das molare Verhältnis von Ti: Zr 47:53 beträgt.

**17.** Zusammensetzung nach Anspruch 15 oder 16, **dadurch erhältlich,** daß das Blei(II)-carboxylat ganz oder teilweise in situ aus Blei(II)-oxid und mindestens einem weiteren Mol Carbonsäure oder einer Mischung aus Carbonsäuren entsteht.

**18.** Zusammensetzung nach einem oder mehreren der Ansprüche 15 bis 17, **dadurch erhältlich,** daß die Carbonsäuren ganz oder teilweise in situ aus einem oder mehreren Carbonsäureanhydriden entstehen.

**19.** Zusammensetzung nach einem oder mehreren der Ansprüche 15 bis 18, **dadurch gekennzeichnet,** daß das Bleicarboxylat ein Bleiacetat der allgemeinen Formel V ist,

$$Pb(O\text{-}CO\text{-}CH_3)_l \cdot mPbO \cdot nH_2O \qquad (V),$$

in der $l$ = 2 oder 4, m = 0 bis 2 und n = 0 bis 10 bedeutet.

**20.** Zusammensetzung nach einem oder mehreren der Ansprüche 15 bis 19, **dadurch gekennzeichnet,** daß sie mit Fremdmetallen dotiert ist.

**21.** Zusammensetzung nach einem oder mehreren der Ansprüche 15 bis 20, <u>dadurch gekennzeichnet</u>, daß $Pb^{2+}$ teilweise durch $Mg^{2+}$ und/oder $Ca^{2+}$ und/oder $Sr^{2+}$ und/oder $Ba^{2+}$ substituiert ist.

22. Zusammensetzung nach einem oder mehreren der Ansprüche 15 bis 21, **dadurch gekennzeichnet**, daß $Zr^{4+}$ und/oder $Ti^{4+}$ teilweise durch $Sn^{4+}$ und/ oder $Hf^{4+}$ substituiert ist.

**Claims**

1. Process for producing moulded bodies based on PZT ($Pb(Zr,Ti)O_3$, lead zirconatelead titanate, characterised in that organic zirconium compounds of the general formula I,

$$Zr(OR^1)_4 \qquad (I)$$

and organic titanium compounds of the general formula II,

$$Ti(OR^2)_4 \qquad (II),$$

in which the radicals $R^1$ and $R^2$ in each case are the same or different and denote straight-chain, branched or cyclic alkyl radicals having 1 to 10 carbon atoms, are treated separately or together and based on 1 mole of compounds I plus II with 0 to 4 moles of an alcohol or a mixture of alcohols of the general formula III and/ or IV,

$$R^3\text{-X-}R^4\text{-OH} \qquad (III)$$

$$R^3\text{-CX-}R^4\text{-OH} \qquad (IV)$$

in which $R^3$ denotes a straight-chain, branched or cyclic alkyl radical having 1 to 10 carbon atoms, $R^4$ represents an alkylene radical having 2 to 4 carbon atoms and X is O, S or $NR^5$, where $R^5$ is hydrogen or alkyl having 1 to 4 carbon atoms,

in that the resulting mixture(s) or the compounds I and II are reacted separately or together and based on in each case 1 mole of compounds I and II with 1 to 3 moles of one or more carboxylic acids having 2 to 10 carbon atoms, in that everything, based on 1 mole of compounds I plus II, is reacted with 1 to 1.5 moles of one or more Pb(II) and/or Pb(IV) carboxylates, which are derived from substituted or unsubstituted, monovalent or multivalent, saturated or unsaturated, straight-chain, branched, cyclic or aromatic carboxylic acids or hydroxycarboxylic acids having 1 to 18 carbon atoms, in that the mixture is subjected to hydrolytic condensation, in that the volatile portions are removed, in that the resulting composition which is solid at room temperature is heated until a highly viscous liquid is produced, in that this liquid is processed to form moulded bodies, and in that the moulded bodies are heated at temperatures of at least 500°C.

2. Process according to claim 1, characterised in that the highly viscous liquid is processed to form fibres, films or coatings.

3. Process according to claim 1 or 2, characterised in that compounds of the formula I and/or II are used, in which $R^1$ and/or $R^2$ denote alkyl radicals having 2 to 5 carbon atoms.

4. Process according to one or more of claims 1 to 3, characterised in that lead(II) oxide and, based on one mole of lead(II) oxide, at least one further mole of one or more carboxylic acids are used for in-situ production of the lead(II) carboxylate.

5. Process according to one or more of claims 1 to 4, characterised in that one or more carboxylic acid anhydrides are used for in-situ production of carboxylic acids.

6. Process according to one or more of claims 1 to 5, characterised in that the reaction is preferably carried out using carboxylic acids having 2 to 6 carbon atoms.

7. Process according to one or more of claims 1 to 6, characterised in that the reaction is carried out using a lead acetate of the general formula V,

$$Pb(O\text{-CO-}CH_3)_l \cdot mPbO \cdot nH_2O \qquad (V),$$

in which l = 2 or 4, m = 0 to 2 and n = 0 to 10.

8. Process according to one or more of claims 1 to 7, characterised in that $Pb(O\text{-CO-}CH_3)_2 \cdot 3H_2O$ is used.

9. Process according to one or more of claims 1 to 8, characterised in that the hydrolytic condensation is carried out by adding water or moisture.

10. Process according to one or more of claims 1 to 9, characterised in that the compounds I and II are used in a molar ratio of 53:47.

**11.** Process according to one or more of claims 1 to 10, characterised in that the mixture(s) and/or the highly viscous liquid are treated with foreign metal compounds for doping the moulded bodies.

**12.** Process according to one or more of claims 1 to 11, characterised in that the mixture(s) and/or the highly viscous liquid are treated with Mg(II) and/or Ca(II) and/or Sr(II) and/or Ba(II) compounds for partial substitution of $Pb^{2+}$.

**13.** Process according to one or more of claims 1 to 12, characterised in that the mixture(s) and/or the highly viscous liquid are treated with Sn(IV) and/or with Hf(IV) compounds for partial substitution of $Zr^{4+}$ and/or $Ti^{4+}$.

**14.** Process according to one or more of claims 1 to 13, characterised in that the highly viscous liquid is diluted with solvent before shaping.

**15.** Composition which is solid at room temperature for producing moulded bodies based on PZT (Pb(Zr,Ti)$O_3$, lead zirconate-lead titanate, which can be obtained in that organic zirconium compounds of the general formula I,

$$Zr(OR^1)_4 \qquad (I)$$

and organic titanium compounds of the general formula II,

$$Ti(OR^2)_4 \qquad (II),$$

in which the radicals $R^1$ and $R^2$ in each case are the same or different and denote straight-chain, branched or cyclic alkyl radicals having 1 to 10 carbon atoms,
are treated separately or together and based on 1 mole of compounds I plus II with 0 to 4 moles of an alcohol or a mixture of alcohols of the general formula III and/or IV,

$$R^3\text{-X-}R^4\text{-OH} \qquad (III)$$

$$R^3\text{-CX-}R^4\text{-OH} \qquad (IV)$$

in which $R^3$ denotes a straight-chain, branched or cyclic alkyl radical having 1 to 10 carbon atoms, $R^4$ represents an alkylene radical having 2 to 4 carbon atoms and X is O, S or $NR^5$, where

$R^5$ is hydrogen or alkyl having 1 to 4 carbon atoms,

in that the resulting mixture(s) or the compounds I and II are reacted separately or together and based on in each case 1 mole of compounds I and II with 1 to 3 moles of one or more carboxylic acids having 2 to 10 carbon atoms, in that everything, based on 1 mole of compounds I plus II, is reacted with 1 to 1.5 moles of one or more Pb(II) and/or Pb(IV) carboxylates, which are derived from substituted or unsubstituted, monovalent or multivalent, saturated or unsaturated, straight-chain, branched, cyclic or aromatic carboxylic acids or hydroxycarboxylic acids having 1 to 18 carbon atoms, in that the mixture is subjected to hydrolytic condensation, in that the volatile portions are removed.

**16.** Composition according to claim 15, characterised in that the molar ratio of Ti:Zr is 47:53.

**17.** Composition according to claim 15 or 16, which can be obtained in that the lead(II) carboxylate is produced wholly or partly in situ from lead(II) oxide and at least one further mole of carboxylic acid or a mixture of carboxylic acids.

**18.** Composition according to one or more of claims 15 to 17, which can be obtained in that the carboxylic acids are produced wholly or partly in situ from one or more carboxylic acid anhydrides.

**19.** Composition according to one or more of claims 15 to 18, characterised in that the lead carboxylate is a lead acetate of the general formula V,

$$Pb(O\text{-}CO\text{-}CH_3)_l \cdot mPbO \cdot nH_2O \qquad (V),$$

in which l = 2 or 4, m = 0 to 2 and n = 0 to 10.

**20.** Composition according to one or more of claims 15 to 19, characterised in that it is doped with foreign metals.

**21.** Composition according to one or more of claims 15 to 20, characterised in that $Pb^{2+}$ is partly substituted by $Mg^{2+}$ and/or $Ca^{2+}$ and/or $Sr^{2+}$ and/or $Ba^{2+}$.

**22.** Composition according to one or more of claims 15 to 21, characterised in that $Zr^{4+}$ and/or $Ti^{4+}$ is partly substituted by $Sn^{4+}$ and/or $Hf^{4+}$.

**Revendications**

1. Procédé de fabrication de corps moulés à base de PZT $(Pb(Zr,Ti)O_3$, zirconate de plomb-titanate de plomb), caractérisé en ce qu'on ajoute des composés de zirconium organiques de formule générale I :

$$Zr(OR^1)_4 \qquad (I)$$

et des composés de titane organiques de formule générale II :

$$Ti(OR^2)_4 \qquad (II)$$

dans lesquels les radicaux $R^1$ et $R^2$ sont respectivement identiques ou différents et désignent des radicaux alkyle à chaîne droite, ramifiés ou cycliques avec 1 à 10 atomes de carbone,
séparément ou conjointement et, par rapport à 1 mole des composés I plus II, à 0 à 4 moles d'un alcool ou d'un mélange d'alcools de formules générales III et/ou IV :

$$R^3\text{-}X\text{-}R^4\text{-}OH \qquad (III)$$

$$R^3\text{-}CX\text{-}R^4\text{-}OH \qquad (IV)$$

dans lesquelles $R^3$ désigne un radical alkyle à chaîne droite, ramifié ou cyclique avec 1 à 10 atomes de carbone, $R^4$ représente un radical alkylène avec 2 à 4 atomes de carbone et X est O, S ou $NR^5$, où $R^5$ désigne de l'hydrogène ou un radical alkyle avec 1 à 4 atomes de carbone,
en ce qu'on fait réagir le (s) mélange(s) obtenu(s) ou les composés I et II, séparément ou conjointement, et, par rapport respectivement à 1 mole des composés I et II, avec 1 à 3 moles d'un ou plusieurs acides carboniques avec 2 à 10 atomes de carbone, en ce qu'on fait tout réagir, par rapport à 1 mole des composés I plus II, avec 1 à 1,5 mole d'un ou plusieurs carboxylates de Pb(II) et/ou Pb(IV), qui sont dérivés d'acides carboniques ou d'acides hydroxycarboniques substitués ou non substitués, monovalents ou polyvalents, saturés ou insaturés, à chaîne droite, ramifiés, cycliques ou aromatiques, ayant 1 à 18 atomes de carbone, en ce qu'on soumet le mélange à une condensation hydrolytique, en ce qu'on élimine les fractions volatiles, en ce qu'on chauffe la masse obtenus qui est solide à température ambiante jusqu'à ce que l'on obtienne un liquide très visqueux, en ce qu'on convertit ce liquide en corps moulés et en ce qu'on chauffe les corps moulés à des températures d'au moins 500°C.

2. Procédé selon la revendication 1, caractérisé en ce qu'on convertit le liquide très visqueux en fibres, en feuilles ou en revêtements.

3. Procédé selon la revendication 1 ou 2, caractérisé en ce qu'on utilise des composés de formule I et/ou II dans lesquels $R^1$ et/ou $R^2$ désignent des radiaux alkyle avec 2 à 5 atomes de carbone.

4. Procédé selon une ou plusieurs des revendications 1 à 3, caractérisé en ce qu'on utilise, pour la fabrication in situ du carboxylate de plomb(II), de l'oxyde de plomb(II) et, par rapport à une mole d'oxyde de plomb(II), une autre mole d'un ou plusieurs acides carboniques.

5. Procédé selon une ou plusieurs des revendications 1 à 4, caractérisé en ce qu'on utilise un ou plusieurs anhydrides d'acides carboniques pour la fabrication in situ des acides carboniques.

6. Procédé selon l'une ou plusieurs des revendications 1 à 5, caractérisé en ce que la réaction est de préférence réalisée avec des acides carboniques ayant 2 à 6 atomes de carbone.

7. Procédé selon une ou plusieurs des revendications 1 à 6, caractérisé en ce qu'on effectue la réaction avec un acétate de plomb de formule générale V :

$$Pb(O\text{-}CO\text{-}CH_3)_l \bullet mPbO \bullet nH_2O \qquad (V)$$

dans laquelle l = 2 ou 4, m = 0 à 2 et n = 0 à 10.

8. Procédé selon une ou plusieurs des revendications 1 à 7, caractérisé en ce qu'on utilise du $Pb(O\text{-}CO\text{-}CH_3)_2 \bullet 3H_2O$.

9. Procédé selon une ou plusieurs des revendications 1 à 8, caractérisé en ce qu'on effectue la condensation hydrolytique par addition d'eau ou d'humidité.

10. Procédé selon une ou plusieurs des revendications 1 à 9, caractérisé en ce qu'on utilise les composés I et II dans un rapport molaire de 53:47.

11. Procédé selon une ou plusieurs des revendications 1 à 10, caractérisé en ce qu'on mélange le(s) mélange(s) et/ou le liquide très visqueux à des composés de métaux étrangers pour doper les corps moulés.

12. Procédé selon une ou plusieurs des revendications 1 à 11, caractérisé en ce qu'on mélange le(s) mélange(s) et/ou le liquide très visqueux à des composés de Mg(II) et/ou de Ca(II) et/ou de Sr(II) et/ou de Ba(II) en substitution partielle du $Pb^{2+}$.

**13.** Procédé selon une ou plusieurs des revendications 1 à 12, caractérisé en ce qu'on mélange le(s) mélange(s) et/ou le liquide très visqueux à des composés de Sn(IV) et/ou de Hf(IV) en substitution partielle du $Zr^{4+}$ et/ou du $Ti^{4+}$.

**14.** Procédé selon une ou plusieurs des revendications 1 à 13, caractérisé en ce qu'on dilue le liquide très visqueux avec un solvant avant le façonnage.

**15.** Composition solide à température ambiante pour la fabrication de corps moulés à base de PZT (Pb(Zr, Ti)O$_3$, zirconate de plomb-titanate de plomb) obtenue par les étapes suivantes :

on ajoute des composés de zirconium organiques de formule générale I :

$$Zr(OR^1)_4 \qquad\qquad (I)$$

et des composés de titane organiques de formule générale II :

$$Ti(OR^2)_4 \qquad\qquad (II)$$

dans lesquels les radicaux $R^1$ et $R^2$ sont respectivement identiques ou différents et désignent des radicaux alkyle à chaîne droite, ramifiés ou cycliques avec 1 à 10 atomes de carbone,
séparément ou conjointement et, par rapport à 1 mole des composés I plus II, à 0 à 4 moles d'un alcool ou d'un mélange d'alcools de formules générales III et/ou IV :

$$R^3\text{-}X\text{-}R^4\text{-}OH \qquad\qquad (III)$$

$$R^3\text{-}CX\text{-}R^4\text{-}OH \qquad\qquad (IV)$$

dans lesquelles $R^3$ désigne un radical alkyle à chaîne droite, ramifié ou cyclique avec 1 à 10 atomes de carbone, $R^4$ représente un radical alkylène avec 2 à 4 atomes de carbone et X est O, S ou $NR^5$, où $R^5$ désigne de l'hydrogène ou un radical alkyle avec 1 à 4 atomes de carbone, on fait réagir le(s) mélange(s) obtenu(s) ou les composés I et II, séparément ou conjointement, et, par rapport respectivement à 1 mole des composés I et II, avec 1 à 3 moles d'un ou plusieurs acides carboniques avec 2 à 10 atomes de carbone, on fait tout réagir, par rapport à 1 mole des composés I plus II, avec 1 à 1,5 mole d'un ou plusieurs carboxylates de Pb(II) et/ou Pb(IV), qui sont dérivés d'acides carboniques ou d'acides hydroxycarboniques substitués ou non substitués, monovalents ou polyvalents, saturés ou insaturés, à chaîne droite, ramifiés, cycliques ou aromatiques, ayant 1 à 18 atomes de carbone, on soumet le mélange à une condensation hydrolytique et on élimine les fractions volatiles.

**16.** Composition selon la revendication 15, caractérisée en ce que le rapport molaire de Ti:Zr est de 47: 53.

**17.** Composition selon la revendication 15 ou 16, qui peut être obtenue en produisant le carboxylate de plomb(II) en totalité ou en partie in situ à partir d'oxyde de plomb(II) et au moins d'une autre mole d'acide carbonique ou d'un mélange d'acides carboniques.

**18.** Composition selon une ou plusieurs des revendications 15 à 17, qui peut être obtenue en produisant les acides carboniques en totalité ou en partie in situ à partir d'un ou plusieurs anhydrides d'acides carboniques.

**19.** Composition selon une ou plusieurs des revendications 15 à 18, caractérisée en ce que le carboxylate de plomb est un acétate de plomb de formule générale V :

$$Pb(O\text{-}CO\text{-}CH_3)_l \bullet mPbO \bullet nH_2O \qquad (V)$$

dans laquelle l = 2 ou 4, m = 0 à 2 et n = 0 à 10.

**20.** Composition selon une ou plusieurs des revendications 15 à 18, caractérisée en ce qu'elle est dopée par des métaux étrangers.

**21.** Composition selon une ou plusieurs des revendications 15 à 20, caractérisée en ce que $Pb^{2+}$ est partiellement remplacé par $Mg^{2+}$ et/ou $Ca^{2+}$ et/ou $Sr^{2+}$ et/ou $Ba^{2+}$.

**22.** Composition selon une ou plusieurs des revendications 15 à 21, caractérisée en ce que $Zr^{4+}$ et/ou $Ti^{4+}$ est (sont) remplacé(s) en partie par $Sn^{4+}$ et/ou $Hf^{4+}$.